# EUROPEAN PATENT APPLICATION

(11) **EP 3 050 768 A1**
(43) Date of publication of application: **03.08.2016**
(21) Application number: 14847210.3
(22) Date of filing: 05.09.2014
(51) Int. Cl.: B60W 10/10, B60K 6/485, B60K 6/547, B60L 11/14, B60W 10/06, B60W 10/08, B60W 20/00, F16H 59/14, F16H 59/74, F16H 61/02

(54) **CONTROL DEVICE FOR HYBRID VEHICLE HAVING STEPPED AUTOMATIC TRANSMISSION**

(30) Priority: 26.09.2013 JP 2013200435
(71) Applicant: Aisin Seiki Kabushiki Kaisha, Aichi 448-8650 (JP)
(72) Inventor: MORI, Kyosuke, kariya-shi Aichi 448-8650 (JP); MISU, Takahiro, kariya-shi Aichi 448-8650 (JP); TOJO, Takeshi, kariya-shi Aichi 448-8650 (JP); SHISHIDO, Yo, kariya-shi Aichi 448-8650 (JP)
(74) Representative: Kramer Barske Schmidtchen Patentanwälte PartG mbB
(86) International application number: PCT/JP2014/073574
(87) International publication number: WO 2015/045817

(57) **Abstract**

A control device according to an embodiment includes a gear shift information acquisition portion (32) acquiring gear stage information selected in a current running state by a multi-stage automatic transmission that selects one of a plurality of gear stages having different transmission gear ratios, a required information acquisition portion (34) acquiring required information that shows a required drive force required by the vehicle, an actual drive force acquisition portion (36) acquiring an actual drive force that is provided by a combination of an actual engine drive force actually generated by a drive of an internal combustion engine in the current running state and an actual motor drive force actually generated by a drive of a motor in the current running state, and a control portion (38) selecting and shifting the gear stage of the multi-stage automatic transmission in response to the required drive force. The control portion (38) performs a delay process delaying a kick down of the currently-selected gear stage in a direction where the transmission gear ratio increases until a predetermined condition is satisfied in a case where the actual drive force is less than the required drive force by the multi-stage automatic transmission.

## Description

### TECHNICAL FIELD

An embodiment of the present invention relates to a control device of a hybrid vehicle including a multi-stage automatic transmission.

### BACKGROUND ART

A hybrid vehicle including a multi-stage automatic transmission is controlled to run by using an electric motor in a range where the fuel consumption efficiency of an internal combustion engine is low, and to run by using the internal combustion engine in a range where the fuel consumption efficiency of the internal combustion engine is high. In a case where a high drive force is required, a desired drive force is achieved by using the internal combustion engine and the electric motor as drive sources. Further, in a case where a required drive force cannot be provided even in a case where the internal combustion engine and the electric motor are used, the hybrid vehicle is controlled to achieve the required drive force by the increase of a gear ratio by the downshift of a gear stage of the multi-stage automatic transmission from a current gear stage to a low-speed gear stage.

### DOCUMENT OF PRIOR ART

### PATENT DOCUMENT

Patent document 1: JP2003-146115A

### OVERVIEW OF INVENTION

### PROBLEM TO BE SOLVED BY INVENTION

As described above, in a case where the great drive force is required, that is, in a case where a driver tries to increase the speed by depressing an accelerator pedal further, and in a case where the required drive force cannot be provided even if the respective drive forces of the internal combustion engine and of the electric motor are used, the hybrid vehicle tries to increase the drive force by downshifting the multi-stage automatic transmission as one of countermeasures at that time. However, in this case, the number of rotation of the internal combustion engine increases and the drive force is generated after a series of processes disconnecting a clutch, operating the shift of the gear stage, and reconnecting the clutch. That is, the increase of the drive force delays in response to the depressing of the accelerator pedal by at least the time of downshifting. Thus, the driver tends to depress the accelerator pedal further before the drive force is increased. In this case, because the drive force increased after the downshifting includes a drive force that is acquired by the further depressing of the accelerator pedal, the drive force is greater than the driver intends and the driver may release the accelerator pedal. As a result, the multi-stage automatic transmission upshifts, and finally, may be returned to an original gear stage. As such, the multi-stage automatic transmission responds to the required drive force and operates the shift of the gear stage unnecessarily against the intention of the driver. Thus, the drivability may be decreased, and, for example, the fuel consumption may be decreased due to the unnecessary downshift. Accordingly, a control device of a hybrid vehicle including a multi-stage automatic transmission, the control device that can relieve the decrease of the drivability and the decrease of the fuel consumption, is desired to be developed.

### MEANS FOR SOLVING PROBLEM

A control device of a hybrid vehicle including a multi-stage automatic transmission includes, for example, a gear shift information acquisition portion acquiring gear stage information selected in a current running state by the multi-stage automatic transmission that selects one of a plurality of gear stages having different transmission gear ratios, a required information acquisition portion acquiring required information that shows a required drive force required by the vehicle, an actual drive force acquisition portion acquiring an actual drive force that is provided by a combination of an actual engine drive force actually generated by a drive of an internal combustion engine in the current running state and an actual motor drive force actually generated by a drive of a motor in the current running state, and a control portion selecting and shifting the gear stage of the multi-stage automatic transmission in response to the required drive force, the control portion performing a delay process delaying a gear shift of the currently-selected gear stage in a direction where the transmission gear ratio increases until a predetermined condition is satisfied in a case where the actual drive force is less than the required drive force by the multi-stage automatic transmission. According to this aspect, even in a case where the actual drive force is less than the required drive force, the operation of the downshift can be inhibited by delaying a process until a predetermined condition is satisfied instead of shifting the gear immediately in the direction where the transmission gear ratio increases. In this case, because the drive force is continuously outputted in the gear stage of the current running state, the driver can be inhibited from depressing an accelerator pedal further and from performing the returning operation of the accelerator pedal. As a result, the operation of the accelerator pedal is simplified and the degradation of the drivability can be inhibited.

According to the control device of the hybrid vehicle including the multi-stage automatic transmission according to the present embodiment, the control portion may terminate the delay process and may shift the gear stage in the direction where the transmission gear ratio increases in a case where the required drive force increases as the predetermined condition, and in a case where a delay time from a start of an operation of the delay process reaches a predetermined targeted delay time as the predetermined condition. The targeted delay time can be, for example, a predetermined value, or is changeable in accordance with a predetermined regulation. In a case where the required drive force increases even though the delay time reaches the targeted delay time, that is, in a case where the driver requires to accelerate the vehicle further, the downshift is operated. As a result, the gear shift control that meets the requirement of the driver is available and the drivability can be enhanced.

According to the control device of the hybrid vehicle including the multi-stage automatic transmission according to the present embodiment, the control portion may reduce the targeted delay time in response to an increasing rate of the required drive force. The required drive force can correspond to, for example, the depressing amount of the accelerator pedal. The increase rate of the required drive force can be shown by corresponding to the depressing speed of the accelerator pedal. According to the aspect, in a case where the accelerator pedal is slowly depressed, it is determined that the driver requires the acceleration and intends on the slow acceleration. Thus, the ratio of the reduction of the targeted delay time decreases, and the time until the delay process release increases so that the drive force starts slowly. In this case, even though the release of the delay process is delayed, the driver may not feel uncomfortable feeling and the drivability is not degraded because the driver does not require the rapid change of the drive force. On the other hand, in a case where the accelerator pedal is rapidly depressed, it is determined that the driver intends on the prompt acceleration. Thus, the ratio of the reduction of the targeted delay time increases comparing to a case where the accelerator pedal is slowly depressed. As a result, the downshift can be performed at the timing that corresponds to the change of the drive force that the driver intends, and the drivability is enhanced.

According to the control device of the hybrid vehicle including the multi-stage automatic transmission according to the present embodiment, the control portion may change the targeted delay time to a predetermined shortest time in a case where the required information is equal to or greater than a predetermined value. The case where the required information is greater than the predetermined value corresponds to, for example, the case where the accelerator pedal is depressed to the maximum, that is, the case where the driver strongly requires the acceleration. In this case, because the targeted delay time changes to a predetermined shortest time, the downshift is operated immediately and the drive force is increased. Because the control corresponding to the running intention of the driver is available, the drivability is enhanced.

The control device of the hybrid vehicle including the multi-stage automatic transmission according to the present embodiment may further include a maximum drive force acquisition portion acquiring a maximum drive force that is generated by the combination of the internal combustion engine and the motor in the currently-selected gear stage. The control portion may terminate the delay process and may shift the gear stage in the direction where the transmission gear ratio increases in a case where the required drive force increases as the predetermined condition, and in a case where a difference between the maximum drive force and the actual drive force comes to be within a predetermined value as the predetermined condition. According to the aspect, in a case where the actual drive force is close to the maximum drive force that can be generated by the currently-selected gear stage, and in a case where the required drive force increases even though the difference is within the predetermined range, that is, in a case where the driver requires the acceleration of the vehicle further, the downshift is operated. As a result, the control of the transmission reflecting the requirement of the driver is available, and the drivability can be enhanced.

According to the control device of the hybrid vehicle including the multi-stage automatic transmission according to the present embodiment, the required information acquisition portion may acquire the current required drive force on a basis of a drive force map that defines a relationship between an accelerator opening and a vehicle speed. According to the aspect, for example, the required drive force can be easily acquired and the delay process can be performed smoothly.

According to the control device of the hybrid vehicle including the multi-stage automatic transmission according to the present embodiment, the control portion may acquire the targeted delay time in response to an increase amount of an acceleration on a basis of a targeted delay time map that defines a relationship between an accelerator opening and the targeted delay time. According to the aspect, for example, the mode of the downshift is able to be shifted in a state where the accelerator pedal is operated. The intention of the driver can be reflected to the control and the drivability can be enhanced. According to the aspect, for example, the mode of the downshift is able to be shifted in a state where the accelerator pedal is operated. The intention of the driver can be reflected to the control and the drivability can be enhanced.

According to the control device of the hybrid vehicle including the multi-stage automatic transmission according to the present embodiment, the control portion may select a predetermined longest targeted delay time in a case where the accelerator opening is less than 25 percent of a fully-opened accelerator opening. The control portion may select a targeted delay time that is reduced by 50 percent of the longest targeted delay time in a case where the accelerator opening is equal to or greater than 25 percent and less than 50 percent of the fully-opened accelerator opening. According to the aspect, for example, the mode of the downshift is able to be shifted in a state where the accelerator pedal is operated. The intention of the driver can be reflected to the control and the drivability can be enhanced.

According to the control device of the hybrid vehicle including the multi-stage automatic transmission according to the present embodiment, the control portion may change the targeted delay time to a predetermined shortest value in a case where the accelerator opening is greater than a predetermined value. According to the aspect, for example, the mode of the downshift is able to be shifted in a state where the accelerator pedal is operated. The intention of the driver can be reflected to the control and the drivability can be enhanced.

### BRIEF DESCRIPTION OF DRAWINGS

[Fig. 1] Fig. 1 is a view schematically illustrating a system of a hybrid vehicle including a multi-stage automatic transmission being provided with a control device according to an embodiment;
[Fig. 2] Fig. 2 is an imaginary view illustrating an example of a gear shift map of the transmission of the hybrid vehicle including the multi-stage automatic transmission being provided with the control device according to the embodiment;
[Fig. 3] Fig. 3 is a block diagram schematically illustrating a control unit including the control device according to the embodiment;
[Fig. 4] Fig. 4 is an imaginary view illustrating an example of a characteristic of an engine of the hybrid vehicle including the multi-stage automatic transmission being provided with the control device according to the embodiment;
[Fig. 5] Fig. 5 is an imaginary view illustrating an example of a characteristic of a motor of the hybrid vehicle including the multi-stage automatic transmission being provided with the control device according to the embodiment;
[Fig. 6] Fig. 6 is a flowchart explaining an example of a control of the hybrid vehicle including the multi-stage automatic transmission being provided with the control device according to the embodiment;
[Fig. 7] Fig. 7 is a flowchart explaining an example of a delay release condition acquisition process shown in the flowchart in Fig. 6; and
[Fig. 8] Fig. 8 is a flowchart explaining another example of the delay release condition acquisition process shown in the flowchart in Fig. 6.

### MODE FOR CARRYING OUT THE INVENTION

Hereinafter, an illustrative embodiment of the present invention will be disclosed. The structure of the embodiment that will be shown below and an action and a result (effect) that are provided by the structure are an example. The present invention is available by a structure that is other than the structure that is disclosed in the following embodiment, and is able to have various effects (including derivative effects) that are provided by a basic structure.

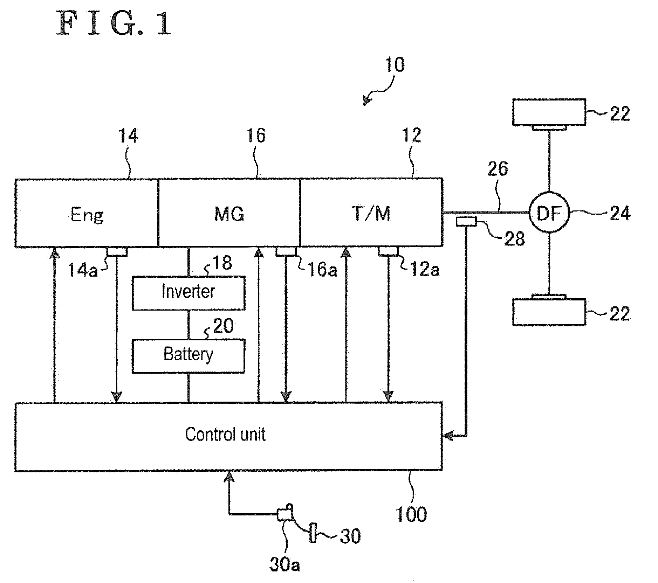

Fig. 1 is a view schematically illustrating a system of a hybrid vehicle 10 being provided with a control unit 100 including a control device according to the embodiment. For example, the hybrid vehicle 10 is provided with a multi-stage automatic transmission 12 (hereinafter simply referred to as a transmission 12, or T/M 12). The hybrid vehicle 10 includes an internal combustion engine (for example, an engine 14; Eng) and a motor (for example, a motor generator 16; MG) as sources of a rotational force (drive force).

The control unit 100 integrally controls the transmission 12, the engine 14, and the motor generator 16. The control unit 100 is configured as, for example, an electric control unit, or an ECU. The ECU includes, for example, a micro controller unit, or a MCU, a power supply circuit, a driver (a controller), an input-output converter circuit, and an input-output protection circuit (all is not shown). The ECU is configured by an electric component (not shown) mounted on a circuit board. The circuit board is contained in a case (not shown). The MCU includes, for example, a central processing unit, or a CPU, a main memory unit (a memory), an interface (an input-output device), a transmission device, and a bus (all is not shown). The main memory unit is, for example, a read only memory, or a ROM and a random access memory, or a RAM. The CPU performs arithmetic processing in accordance with a program installed in, for example, the main memory unit, and controls each of the parts, for example, the engine 14.

The engine 14 includes, for example, a fuel injection device, an ignition device, and an electrically-controlled throttle valve. The engine 14 is an internal combustion engine that uses fuel, for example, gasoline, diesel oil, alcohol, and hydrogen. For example, the engine 14 is a port-injection-type engine, or a cylinder-injection-type engine (a direct-injection-type engine). The control unit 100 can control, for example, engine torque and rotational speed (the number of rotation per unit of time) of the engine 14 by controlling, for example, the opening of the throttle valve of the engine 14 and the amount of injection of the fuel injection valve. An engine output shaft (for example, a crank shaft) is switchable between a connected state and a disconnected state relative to a side where an input shaft of the transmission 12 is provided via a clutch which is not shown. By the control of the control unit 100 in response to a running condition, the engine output of the engine 14 can be transmitted to a side where the transmission 12 is provided. Moreover, a sensor (a crank angle sensor) 14a that detects the rotational speed of the engine 14 is mounted on the engine 14 and provides the drive condition of the engine 14 to the control unit 100. The information showing the drive state is used for feedback control of the engine 14.

The motor generator 16 receives electric supply from a battery 20 connected via an inverter 18 and supports the drive force generated by the drive of the engine 14. For example, in a case where a great drive force is required when, for example, the vehicle runs on an upgrade hill, and in a case where the vehicle is required to increase the speed when, for example, the vehicle passes another vehicle, or joins with vehicles, the drive force is assisted, the drive force generated by the drive of the motor and by the drive of the engine 14. By the control of the control unit 100, an output shaft of the motor generator 16 is connected to a side where the input shaft of the transmission 12 is provided as required, and transmits the motor output to the transmission 12. The motor generator 16 can be started by cranking the engine output shaft (for example, the crank shaft) when the engine 14 is stopped. That is, the motor generator 16 can include a feature of a starter.

When the hybrid vehicle 10 performs a braking operation, the motor generator 16 is rotatable by the rotational force transmitted from a side where wheels 22 are provided via a differential gear 24 and the transmission 12. The motor generator 16 serves as an electric generator and can recharge (recharged at a time of regeneration) the battery 20 via the inverter 18. Because a motor input shaft (not shown) of the motor generator 16 is rotated by the engine output of the engine 14 when the transmission 12 is in a neutral state, the battery 20 can be recharged (recharged when the vehicle is in a stopped state) via the inverter 18 as described above. When a power distribution mechanism is used, the vehicle performs the aforementioned assist running by using a part of the engine output of the engine 14, and the battery 20 can be recharged (recharged when the vehicle runs) by other engine output.

A sensor (a motor output shaft sensor) 16a detecting the motor rotational speed is mounted on the motor generator 16, and provides the drive state of the motor generator 16 to the control unit 100. Information showing the drive state is used for a feedback control of the motor generator 16.

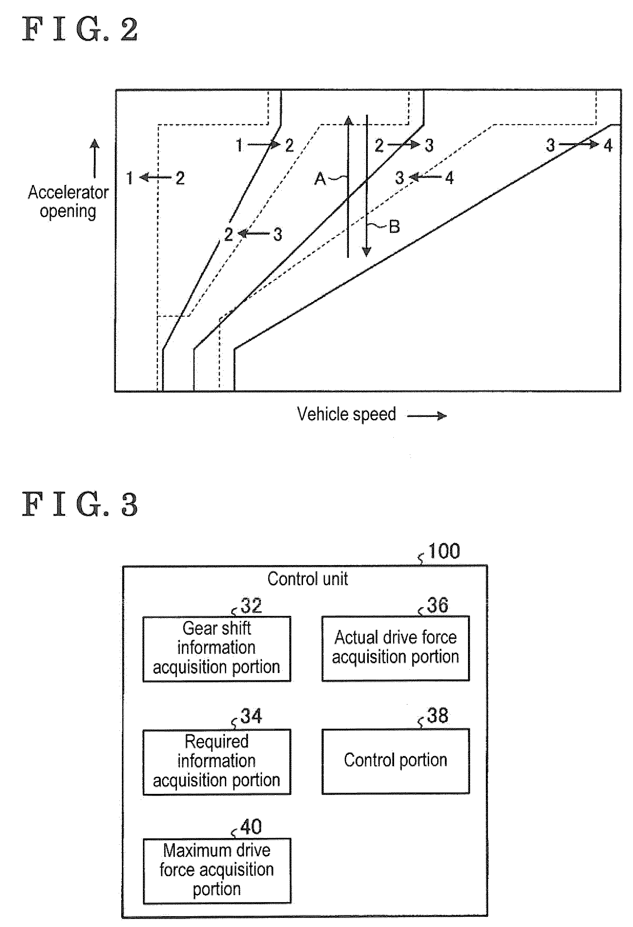

The transmission 12 serves as an automatic transmission that is available by an actuator that shifts the gear based on electric signals. A transmission mechanism serves as a dog transmission including, so-called, a dog clutch. Alternatively, in another embodiment, the transmission 12 can be served as a transmission that includes a synchromesh. Alternatively, in still another embodiment, the transmission 12 can include a planetary gear mechanism. In any cases, for example, the gear is shifted in accordance with a gear shift map (Fig. 2) which will be described later. The transmission 12 serves as a stepped transmission that includes four gear stages discontinuously shifting the transmission gear ratios that are varied from the first gear to the fourth gear. A sensor (for example, a shift sensor) 12a acquiring the currently-selected gear stage information is mounted on the transmission 12. A sensor (a rotational speed sensor) 28 detecting the vehicle speed is mounted on the output shaft 26 of the transmission 12.

For example, the engine 14, the motor generator 16, the transmission 12, the inverter 18, and the battery 20 are integrally controlled by the control unit 100 on the basis of the information from, for example, a sensor (an accelerator opening sensor) 30a being provided at the sensors 12a, 14a, 16a, 28 and at the accelerator pedal 30. The sensor 30a can acquire the required information that shows the required drive force required by the driver by detecting the accelerator opening. For example, in a case where the drive force is required by depressing the accelerator pedal 30 by the driver, the control unit 100 determines the output of the engine 14 and the motor generator 16 on the basis of the required drive force and the current vehicle speed. Along with that, the control unit 100 determines the running state of the hybrid vehicle 10 by selecting the gear stage of the transmission 12.

Fig. 2 is an example of the gear shift map that is referred in a case where the transmission 12 selects the gear stage. The gear shift map can be determined, for example, at the time of the configuration. A number in the gear shift map shows a transition direction of the gear stage. The control unit 100 outputs a command for selecting the gear stage relative to the transmission 12 on the basis of the accelerator opening of the accelerator pedal 30 provided from the sensor 30a, and the current running state (the vehicle speed). Fig. 2 shows a case where the number of gear stages of the transmission 12 corresponds to 4. A gear shift line shown in a solid line shows a gear shift map at the time of the upshift. A gear shift line shown in a dashed line shows a gear shift map at the time of the downshift. For example, in a case where a shift lever is in a drive range, or a D range, the vehicle always starts from the first gear irrespective of the accelerator opening. The vehicle upshifts the gear to the second gear, to the third gear and to the fourth gear sequentially. Meanwhile, a gear shift point (a point where the gear stage is shifted) is set to increase as the accelerator opening increases.

On the other hand, the vehicle downshifts automatically and sequentially from the high gear stage as the speed of the hybrid vehicle 10 decreases. The gear shift point when upshifting differs from the gear shift point when downshifting even though the accelerator opening is constant. This is because the selection of the gear stage is prevented from being unstable because the gear is often shifted around the gear shift point during running.

Meanwhile, according to the hybrid vehicle 10 that includes the multi-stage automatic transmission that selects the gear stage in accordance with the above-described gear shift map, because the driver depresses on the accelerator pedal 30 when the vehicle runs in order to increase the speed, the control unit 100 outputs an output increase command by a predetermined distribution ratio relative to the engine 14 and the motor generator 16. The motor output of the motor generator 16 is changeable by the depressing operation of the accelerator pedal 30 in accordance with the amount of the charge of the battery 20 and the motor characteristics. That is, the actual motor drive force, in other words, the actual motor drive actually generated by the drive of the motor is defined by multiplying the motor output (the motor torque) and the transmission gear ratio at the time and by dividing the amount by a radius of the tire. The actual motor drive force can be increased promptly by the depressing operation of the accelerator pedal 30. Meanwhile, the engine output of the engine 14 changes later than the depressing operation of the accelerator pedal 30. The actual engine drive force actually generated by the drive of the engine 14 is defined by multiplying the engine output (the engine torque) and the transmission gear ratio at the time and by dividing the amount by the radius of the tire. Accordingly, the actual engine drive force of the engine 14 is changed later than the depressing operation of the accelerator pedal 30. Thus, in a case where the actual engine drive force is tried to be increased, the control unit 100 performs the downshifting process of the transmission 12. The downshifting process is required to be performed in a state where the transmission of the torque transmitted from the engine 14 to the transmission 12 is temporarily disconnected. That is, the downshifting process performs a series of operations disconnecting the clutch that is provided between the engine 14 and the transmission 12 and reconnecting the clutch after the gear stage is changed during the disconnection of the clutch. Because the number of rotation of the engine is increased after the completion of the downshifting process, the actual engine drive power of the engine 14 is increased in accordance with the gear stage that is downshifted. Accordingly, the increase of the drive force is late by the time of the downshifting process when the downshifting process is performed in accordance with the depressing of the accelerator pedal 30. Moreover, because the clutch is disconnected during the downshifting process, the transmission of the torque from the engine 14 is temporarily blocked, and a so-called torque loss occurs. Thus, the driver tends to feel that the acceleration feeling is less than intended, or that the vehicle decreases the speed in spite of the acceleration request, and the driver may depress the accelerator pedal 30 further.

For example, in Fig. 2, in a case where the current gear stage corresponds to the third gear stage (the third gear), because the driver depresses the accelerator pedal 30, only the accelerator opening increases while the vehicle speed is almost the same as shown in an arrow A. As a result, the transmission 12 tends to downshift (so-called kick down) forcibly irrespective of the vehicle speed and is shifted to the second gear stage (the second gear). Then, when the downshift is completed and when the engine output of the engine 14 comes to be active later than the depressing of the accelerator pedal 30, the engine output increases and the vehicle accelerates rapidly by including the further depressing of the accelerator pedal 30. Accordingly, the driver feels that the acceleration feeling comes to be greater than intended, and weakens the depressing of the accelerator pedal 30, or releases the depressing. As a result, as shown in an arrow B, the accelerator opening comes to be low and exceeds the gear shift line at the time of upshifting even if the speed of the vehicle slightly increases. Thus, the gear stage is shifted to the third gear stage (the third gear) again. As such, the control for downshifting and upshifting is performed. However, as a result, the gear stage is returned to the gear stage that is provided before the control. Accordingly, the driver may feel an uncomfortable feeling due to the unnatural gear shift, and the drivability may be decreased. In addition, because the number of rotation of the engine 14 comes to be high in accordance with the downshift, the fuel consumption may be degraded in accordance with the increase of the number of rotation of the engine 14.

Here, according to the control device of the hybrid vehicle 10 that includes the multi-stage automatic transmission of the present embodiment, in a case where the current actual drive force is lower than the required drive force, the control device performs a delay process delaying the gear shift of the currently-selected gear stage (the downshift) in a direction where the transmission gear ratio increases until a predetermined condition is satisfied in order to inhibit the aforementioned decrease of the drivability and the degradation of the fuel consumption.

Fig. 3 is a partial block diagram illustrating the structure required for operating the delay process. The control unit 100 is provided with, for example, a gear shift information acquisition portion 32, a required information acquisition portion 34, an actual drive force acquisition portion 36, a control portion 38, and a maximum drive force acquisition portion 40 as a structure that performs the delay process.

The gear shift information acquisition portion 32 acquires a gear stage information that shows the gear stage selected by the transmission 12 in the current running state, the transmission 12 that selects one of plural gear stages that include different transmission gear ratios. The gear shift information acquisition portion 32 acquires the information of the gear stage from the sensor 12a that is configured by, for example, the shift sensor.

The required information acquisition portion 34 acquires the required information showing the required drive force that the driver requires to the hybrid vehicle 10. The required drive force serves as a drive force required by operating the accelerator pedal 30 by the driver with the gear stage that is selected in the current running state. For example, the required drive force can be acquired by referring to a drive force map that is defined by, for example, a test that is operated in advance on the basis of the accelerator opening acquired via the sensor 30a being provided at the accelerator pedal 30, and the current vehicle speed. Meanwhile, the magnitude of the required drive force can be acquired on the basis of the depressing amount of the accelerator pedal 30. The required acceleration and the required deceleration can be acquired based on the depressing speed and the release speed of the accelerator pedal 30.

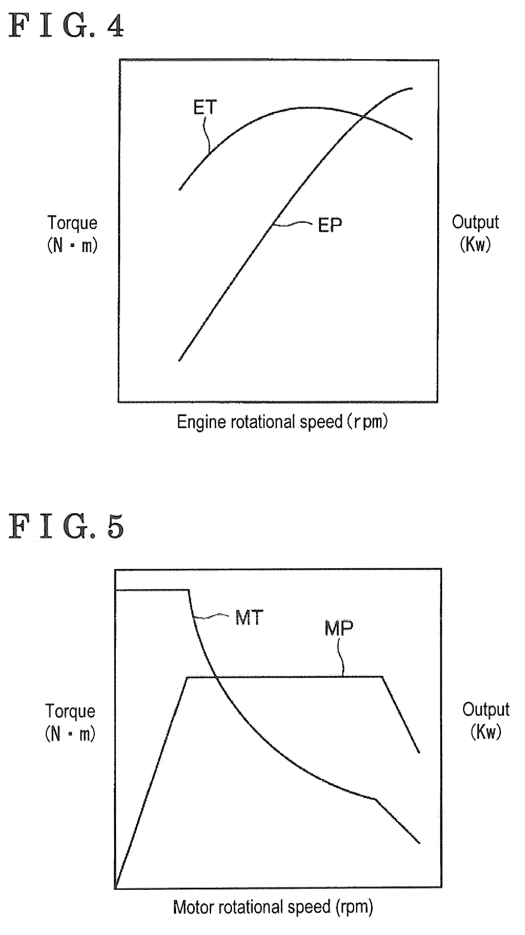

The actual drive force acquisition portion 36 acquires the actual drive force that is provided by the combination of the actual engine drive force actually generated by the drive of the engine 14 in the current running state and the actual motor drive force actually generated by the drive of the motor generator 16 in the current running state. The actual engine drive force can be acquired based on a detected value of the sensor 14a. Fig. 4 is a view illustrating general characteristics of a gear stage of the engine 14. A relational curve ET showing the relation between the rotational speed and the output torque (the engine output), and a relational curvature EP showing the relation between the number of rotation and the output. That is, the actual drive force acquisition portion 36 acquires the engine output (torque) currently output by the engine 14 by the mapping on the basis of the number of rotation of the engine 14 being provided from the sensor 14a. The actual engine drive force can be presumably acquired based on the acquired engine output, the transmission gear ratio of the time, and the radius of the tire. Similarly, the actual drive force acquisition portion 36 can acquire the motor output (the motor torque) in the current running state on the basis of a detected value of the sensor 16a, the motor output that is actually outputted by the motor generator 16. Fig. 5 is a view illustrating general characteristics of the motor generator 16. Fig. 5 shows the relational curve MT that illustrates the relationship between the rotational speed and the output torque (the motor torque), and the relational curve MP that illustrates the relationship between the number of rotation and the output. That is, the actual drive force acquisition portion 36 acquires the motor output (the motor torque) that is currently outputted by the motor generator 16 by mapping on the basis of the number of rotation of the motor generator 16 provided from the sensor 16a. Then, the actual motor drive force can be presumably acquired based on the acquired motor output, the transmission gear ratio at the time, and the radius of the tire. Thus, the actual drive force acquisition portion 36 can acquire the actual drive force generated by the drive of the engine 14 and by the motor generator 16 in the current running state.

The control portion 38 selects and shifts the gear stage of the transmission 12 in accordance with the required drive force. In a case where the actual drive force is less than the required drive force, the control portion 38 performs the delay process delaying the downshift of the currently-selected gear stage by the transmission 12 until a predetermined condition is satisfied. In other words, in a case where the driver requires to increase the drive force, the control portion 38 delays the operation of the downshift (the kick down) for increasing the drive force irrespective of whether the respective outputs of the engine 14 and of the motor generator 16 can achieve the required drive force in the current gear stage selected by the transmission 12. Because the downshift is delayed, the torque loss in accordance with the disconnection of the clutch during the time is prevented. Along with that, because the drive force can be continuously supplied by the torque generated by the engine 14 and by the motor generator 16, the deceleration does not occur at least, and the drive force continuously increases toward the maximum value that can be generated in the current gear stage of the transmission 12. As a result, the response of the drive force can be prevented from being delayed resulted from the downshift. That is, the gear shift control of the transmission 12 is inhibited from being performed frequently. The vehicle speed is prevented from being varied in accordance with the gear shift, and the uncomfortable feeling that is given to the driver is reduced. As a result, the degradation of the drivability can be inhibited. In addition, because the downshift process is not performed unnecessarily, the degradation of the fuel consumption can be inhibited.

However, because the maximum drive force that can be generated is determined by the gear stage of the transmission12 it is not favorable that the current gear stage is maintained for a long period in a state where the required drive force continuously increases. Thus, according to the control device of the hybrid vehicle 10 that includes the multi-stage automatic transmission of the present embodiment, in a case where the predetermined condition is satisfied in a state where the required drive force increases, the delay of the downshift is released. For example, in a case where the required drive force increases, and in a case where a delay time from the starting operation of the delay process reaches a predetermined delay time, it is determined that the predetermined condition is satisfied. The delay process is terminated and the downshift process is operated. One of the objectives for the targeted delay time is to restart the downshift process by setting the limit of the delay process time. The targeted delay time can be a predetermined value, or is changeable to meet a predetermined regulation. In a case where the required drive force increases even through the required drive force reaches the targeted delay time, that is, in a case where the driver requires to accelerate the vehicle further, the downshift is operated. As a result, the gear shift control that meets the requirement of the driver is available. Accordingly, the drivability can be enhanced.

Alternatively, according to another embodiment, the control portion 38 may reduce the targeted delay time in accordance with the increasing rate of the required drive force. The required drive force can correspond to, for example, the depressing amount of the accelerator pedal 30. The increase rate of the required drive force can be shown by corresponding to the depressing speed of the accelerator pedal 30. For example, in a case where the accelerator pedal 30 is slowly depressed, it is determined that the driver requires the acceleration, and intends on the slow acceleration. Thus, the ratio of the reduction of the targeted delay time decreases. That is, the control portion 38 is determined that the driver does not require the rapid increase of the drive force by performing the kick down, and delays the downshift. In this case, even though the downshift is delayed, that is, even though the release of the delay process is delayed, the driver may not feel uncomfortable feeling, and the drivability may not be degraded. On the other hand, in a case where the accelerator pedal 30 is rapidly depressed further, it is determined that the driver intends on the prompt acceleration and the increase of the drive force rapidly. Thus, the ratio of the reduction of the targeted delay time increases relative to a case where the accelerator pedal 30 is slowly depressed. As a result, the downshift is performed at the timing that corresponds to the change of the drive force that the driver intends, and the drivability is enhanced.

Alternatively, according to another embodiment, in a case where the required information is equal to or greater than the predetermined value, the control portion 38 may change the targeted delay time to be a predetermined shortest time. The case where the required information is equal to or greater than the predetermined amount may be a case where, for example, the accelerator pedal 30 is depressed to a maximum, or where the depressing speed is equal to or greater than a predetermined value, that is, where the driver is considered to strongly require the acceleration. In this case, the targeted delay time is changed to a predetermined shortest time. As a result, the downshift is performed speedily, and the drive force tries to increase rapidly.

Alternatively, according to another embodiment, in a case where the required drive force increases, and in a case where the difference between the maximum drive force acquired by the maximum drive force acquisition portion 40 and the actual drive force acquired by the actual drive force acquisition portion 36 comes to be within a predetermined value, the control portion 38 may determine that the predetermined condition is satisfied. The control portion 38 may terminate the delay process and may operate the downshift. For example, in a case where the actual drive force comes to be close to the maximum drive force that can be generated in the gear stage currently selected by the transmission 12, and the required drive force increases even though the difference between the actual drive force and the maximum drive force comes to be within a predetermined amount, that is, in a case where the driver continuously requires the further acceleration of the vehicle, the downshift is operated. As a result, the running ability in the current running state is used up to about the maximum, and the drive force is maintained by shifting the gear by reflecting the request of the driver. As a result, the request of the driver can be easily satisfied, and the drivability can be enhanced.

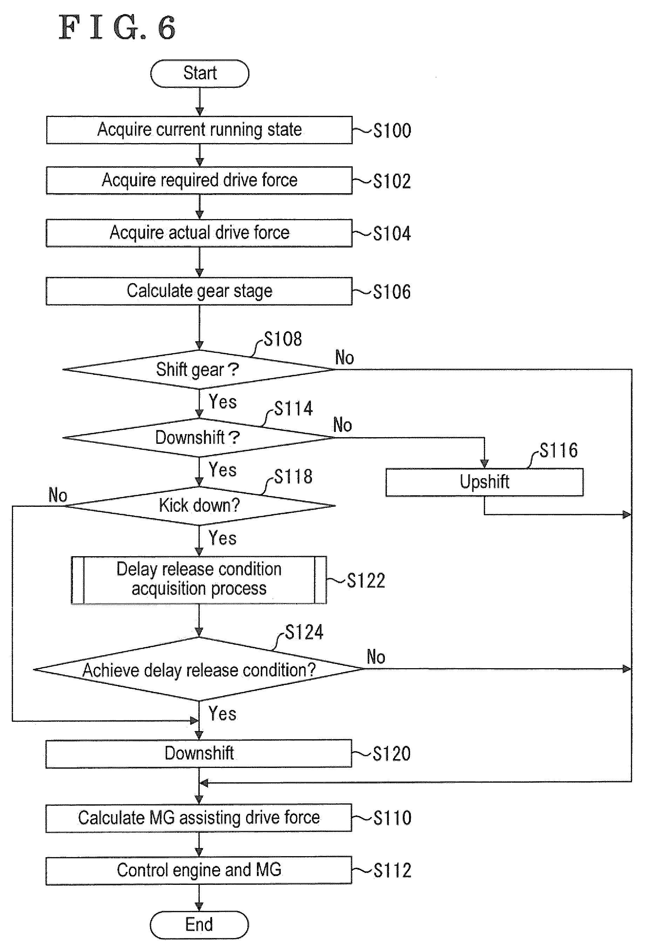

Fig. 6 is a flowchart explaining an example of the control of the hybrid vehicle 10 according to the present embodiment. The process of the flowchart shown in Fig. 6 is continuously performed by a predetermined control period when an ignition switch of the hybrid vehicle 10 is in an on state. The control unit 100 acquires the information (the current running state) relating to the current running state at the timing of the operation of the process (S100). For example, the information showing the state of the transmission 12 is acquired from the sensor 12a. The information showing the state of the engine 14 is acquired from the sensor 12a. The information showing the state of the motor generator 16 is acquired from the sensor 30a. The information showing the vehicle speed of the hybrid vehicle 10 is acquired from the sensor 28. Based on the information, the information showing the current running state of the hybrid vehicle 10 is updated to the latest state.

Next, the required information acquisition portion 34 refers to a predetermined drive force map, and acquires the required drive force that is currently required by the driver on the basis of the accelerator opening acquired from the sensor 30a and of the current vehicle speed acquired from the sensor 28 (S102). The actual drive force acquisition portion 36 refers to, for example, an engine characteristic map shown in Fig. 4, the map that is determined at the time of the configuration, and acquires the current actual engine drive force based on the current rotational speed of the engine 14 acquired from the sensor 14a. Similarly, the actual drive force acquisition portion 36 refers to a motor generator characteristic map that, for example, can be determined at the time of the configuration shown in Fig. 5. The actual drive force acquisition portion 36 acquires the current actual motor drive force on the basis of the current rotational speed of the motor generator 16 acquired from the sensor 16a. The actual drive force acquisition portion 36 acquires the current actual drive force of the hybrid vehicle 10, the current actual drive force that is provided by the combination of the acquired actual engine drive force and the acquired actual motor drive force (S104).

The gear shift information acquisition portion 32 acquires the gear stage information showing the gear stage selected by the transmission 12 in the current running state on the basis of the information acquired from the sensor 12a. Along with that, the gear shift information acquisition portion 32 calculates a recommended gear stage relative to the request of the driver on the basis of the required drive force acquired in S102 and the actual drive force acquired in S104 (S106). The control portion 38 refers to a gear shift map shown in Fig. 2. In a case where the control portion 38 is determined that there is no need to shift the gear to another gear stage in order to achieve the required drive force (the drive force corresponding to the accelerator opening) relative to the current vehicle speed (N in S108), the control unit 100 calculates an assisting drive force assisted by the motor generator 16 for achieving the required drive force (S110). The control unit 100 controls the engine 14 and the motor generator 16 for realizing the required drive force. The flow is once terminated.

In S108, in a case where the control portion 38 is determined that the gear stage is required to be shifted to the other gear stage (Y in S108) and that the downshift is not required (N in S 114) in order to achieve the required drive force (the drive force corresponding to the accelerator opening) relative to the current vehicle speed, the control portion 38 commands the transmission 12 to upshift (S116), for example, in a case where the vehicle speed increases while the accelerator opening is constant and the vehicle speed exceeds the gear shift line when upshifting in the gear shift map in Fig. 2, and in a case where the vehicle speed exceeds the gear shift line when upshifting because the accelerator opening decreases. Then, the control unit 100 moves to S110 and calculates the assisting drive force of the motor generator 16 for achieving the required drive force (S110). Along with that, the control unit 100 controls the engine 14 and the motor generator 16 in order to achieve the required drive force (S112). The flow is once terminated.

In S114, in a case where the control portion 38 is determined that the downshift is required for achieving the required drive force by comparing the actual drive force and the required drive force (Y in S114), the control portion 38 is determined whether the kick down is required (S118). For example, in a case where the vehicle speed exceeds the gear shift line of the downshift because the vehicle speed decreases under the condition where the accelerator opening does not increase, that is, the condition where the driver does not require the acceleration, the kick down is not required (N in S118). The control portion 38 commands the transmission 12 to downshift in accordance with the decrease of the speed (S120). Then, the processes in S110 and S112 are operated and the flow is once terminated.

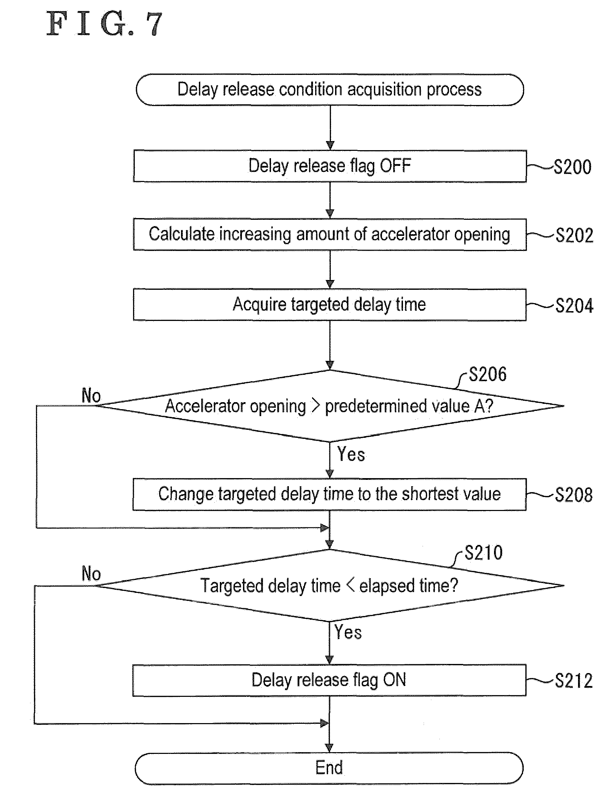

On the other hand, in S118, in a case where the control portion 38 is determined that the kick down is required for achieving the required drive force by comparing the actual drive force and the required drive force (Y in S118), the control portion 38 delays the kick down instead of performing immediately, and operates the delay release condition acquiring process (S122). In a case where the delay release condition explained with a flowchart shown in, for example, Fig. 7 is achieved (Y in S 124), that is, in a case where the control portion 38 is determined to perform the kick down, the downshifting is performed (S120). After operating the downshifting, the processes of S110 and S112 are performed. The flow is once terminated. In a case where the delay release condition is not achieved (N in S124), that is, in a case where the control portion 38 is determined that the kick down is performed, the downshift is performed (S120). After the operation of the downshifting process, the processes of S110 and S 112 are performed and the flow is once terminated. In a case where the delay release condition is not met in S124 (N in S124), the control portion 38 skips the process of S120 and performs the processes of S110 and S 112. The flow is once terminated.

As such, because the kick down is delayed until the delay release condition is satisfied after the transmission 12 is determined to be kicked down for realizing the required drive force, the torque loss in accordance with the disconnection of the clutch in a case where the kick down is performed is prevented. In addition, because the kick down is delayed, the drive force is continuously supplied by the torque generated in the engine 14 and in the motor generator 16 during the delay time. Thus, the deceleration at least does not occur, and the drive force continuously increases toward the maximum value that can be generated in the current gear stage of the transmission 12. As a result, the response delay of the drive force resulted from the kick down can be prevented. As such, according to the control of the present embodiment, because the drive force is continuously provided by the gear stage of the current running state, the further depressing of the accelerator pedal 30 and the returning operation of the accelerator pedal 30 operated by the driver can be inhibited. As a result, the accelerator pedal 30 is simply operated, and the degradation of the drivability can be inhibited. In addition, because the frequent gear shift control can be inhibited, the degradation of the fuel consumption can be inhibited.

Fig. 7 shows a flowchart illustrating an example of the delay release condition acquiring process. The example of Fig. 7 corresponds to an example where a time limit is set for the delay of the kick down, that is, an example where the operation timing of the kick down is changed in accordance with the request of the driver.

In a case where a delay release flag releasing the delay process of the kick down is on, the control portion 38 turns the flag off (S200). Next, the required information acquisition portion 34 calculates the increase amount of the accelerator opening on the basis of the information from the sensor 30a (S202). For example, in a case where the increase amount of the accelerator pedal 30 is great, it is considered that the driver strongly requires the increase of the required drive force. That is, the strong acceleration is required. On the other hand, in a case where the increase amount of the accelerator pedal 30 is not great, it is considered that the driver requires the increase of the required drive force, however, the degree is not great, and it is considered that the driver requires the slow acceleration. The control portion 38 refers to a targeted delay time map that defines the relationship between the accelerator opening defined by, for example, a test in advance, and the targeted delay time. The control portion 38 acquires the targeted delay time in accordance with the increase amount of the acceleration (S204). For example, in a case where the accelerator opening is less than 25 percent relative to a fully opened accelerator opening, a predetermined longest targeted delay time is provided. In a case where the accelerator opening is equal to or greater than 25 percent and less than 50 percent, the targeted delay time that is reduced to 50 percent relative to the longest targeted delay time is selected. As such, because the targeted delay time changes in accordance with the accelerator opening, the mode of the kick down control can be changed in a state where the accelerator pedal 30 is operated. The intention of the driver is reflected to the control and the drivability can be enhanced.

Meanwhile, in a case where the accelerator opening comes to be greater than a predetermined value A, for example, in a case where the accelerator opening is greater than 90 percent, that is, a so-called the depressing of an accelerator pedal to the metal is performed (Y in S206), the control portion 38 determines that the driver requires the rapid acceleration. Accordingly, the targeted delay time is changed to a predetermined shortest value (S208).

In a case where the time being elapsed from when the delay process of the kick down is started reaches the targeted delay time that is acquired in S204, or in a case where the time reaches the targeted delay time of the shortest value that is changed in S208 (Y in S210), the control portion 38 turns the delay release flag showing the delay release on (S212) and the flow is once terminated. As such, because the delay release flag is turned on, the delay release condition is satisfied in S124 in Fig. 6.

In a case where the length of the time elapsed is not greater than the targeted delay time in S210 (N in S210), the process of the S212 is skipped, and the flow is once terminated. In a case where the accelerator opening is not greater than the predetermined value A, for example, in a case where the accelerator pedal is not depressed to the metal in S206 (N in S206), the process of S208 is skipped, and the process after S210 is performed.

As such, because the delay release condition is appropriately changed in accordance with the accelerator opening, that is, the operation state of the accelerator pedal 30 by the driver, the control that is based on the intention of the operation of the driver is available, and the drivability can be enhanced.

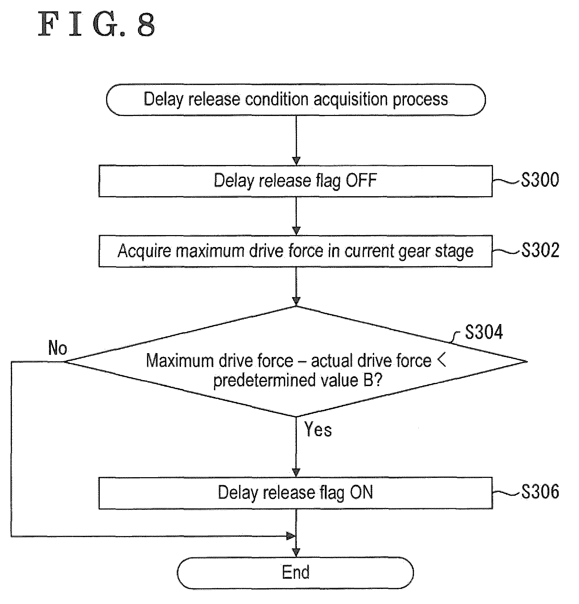

Fig. 8 shows a flowchart illustrating another example of the delay release condition acquiring process. The example in Fig. 8 corresponds to an example where the delay of the kick down is controlled on the basis of the change of the actual drive force, that is, an example where the operation timing of the kick down is changed in accordance with the request of the driver.

In a case where the delay release flag releasing the delay process of the kick down is turned on, the control portion 38 turns the flag off (S300). Next, the maximum drive force acquisition portion 40 acquires the maximum drive force that can be generated by the combination of the engine 14 and the motor generator 16 with the current gear stage selected by the transmission 12 (S302). Because the maximum drive force is determined by the selected gear stage as having no alternative, the value that is previously stored in each of the gear ratios can be acquired. Next, the control unit 100 calculates the difference between the maximum drive force of the acquired current gear stage and the actual drive force of the acquired current gear stage acquired by the actual drive force acquisition portion 36. In a case where the difference is within a predetermined value B (Y in S304), the delay release flag is turned on (S306). For example, in a case where the actual drive force comes to be close to the maximum drive force that can be generated by the current gear stage selected by the transmission 12, and in a case where the required drive force increases even though the difference is within the predetermined value B, that is, in a case where the driver requires the further acceleration of the vehicle and depresses the accelerator pedal 30, the drive force is increased by permitting the kick down. In this case, the running ability in the current running state is applied up to about the maximum, and the drivability can be enhanced by reflecting the requirement of the driver. In an example in Fig. 8, because the delay release flag is turned on, the delay release condition is assumed to be satisfied in S124 in Fig. 6.

In a case where the maximum drive force minus the actual drive force is not greater than the predetermined value B in S304 (N in S304), the process of S306 is skipped and the flow is once terminated.

The flowcharts shown in Figs. 6 and 8 are examples. The delay process and the delay release process of the kick down have only to be performed, and the sequence of the process can be appropriately changed. The similar effects can be acquired.

The embodiments of the present invention have been explained. However, these embodiments are given as examples and are not intended to limit the scope of the invention. These new embodiments can be performed in other various configurations. Various omissions, replacements, and the changes are available without departing from the scope of the subject matter of the present invention. The scope and the subject matter of the invention include the embodiments and the modifications that include in the invention described in the scope of the claims and the scope of equivalents thereof.

For example, the system configuration of the hybrid vehicle 10 shown in Fig. 1 is an example and has only to delay the kick down control of the transmission that is automatically controlled. For example, Fig. 1 shows a case where the motor generator 16 is used, however, a motor without the regeneration feature is applicable. Plural motor generators 16 and motors can be provided. As an example, the control unit 100 integrally controls, for example, the engine 14, the motor generator 16 and the transmission 12, however, a control unit can control the engine 14, the motor generator 16 and the transmission 12 individually, and the engine 14, the motor generator 16 and the transmission 12 can be controlled in cooperation with one another.

### EXPLANATION OF REFERENCE NUMERALS

10...hybrid vehicle, 12...transmission, 14...engine, 16...motor generator, 32...gear shift information acquisition portion, 34...required information acquisition portion, 36...actual drive force acquisition portion, 38...control portion, 40...maximum drive force acquisition portion, 100... control unit

## Claims

1. A control device of a hybrid vehicle including a multi-stage automatic transmission comprising:
a gear shift information acquisition portion acquiring gear stage information selected in a current running state by the multi-stage automatic transmission that selects one of a plurality of gear stages having different transmission gear ratios;
a required information acquisition portion acquiring required information that shows a required drive force required by the vehicle;
an actual drive force acquisition portion acquiring an actual drive force that is provided by a combination of an actual engine drive force actually generated by a drive of an internal combustion engine in the current running state and an actual motor drive force actually generated by a drive of a motor in the current running state; and
a control portion selecting and shifting the gear stage of the multi-stage automatic transmission in response to the required drive force, the control portion performing a delay process delaying a gear shift of the currently-selected gear stage in a direction where the transmission gear ratio increases until a predetermined condition is satisfied in a case where the actual drive force is less than the required drive force by the multi-stage automatic transmission.

2. The control device of the hybrid vehicle including the multi-stage automatic transmission according to claim 1, wherein the control portion terminates the delay process and shifts the gear stage in the direction where the transmission gear ratio increases in a case where the required drive force increases as the predetermined condition, and in a case where a delay time from a start of an operation of the delay process reaches a predetermined targeted delay time as the predetermined condition.

3. The control device of the hybrid vehicle including the multi-stage automatic transmission according to claim 2, wherein the control portion reduces the targeted delay time in response to an increasing rate of the required drive force.

4. The control device of the hybrid vehicle including the multi-stage automatic transmission according to either claim 2 or 3, wherein the control portion changes the targeted delay time to a predetermined shortest time in a case where the required information is equal to or greater than a predetermined value.

5. The control device of the hybrid vehicle including the multi-stage automatic transmission according to claim 1 further comprising:
a maximum drive force acquisition portion acquiring a maximum drive force that is generated by the combination of the internal combustion engine and the motor in the currently-selected gear stage; wherein
the control portion terminates the delay process and shifts the gear stage in the direction where the transmission gear ratio increases in a case where the required drive force increases as the predetermined condition, and in a case where a difference between the maximum drive force and the actual drive force comes to be
within a predetermined value as the predetermined condition.

6. The control device of the hybrid vehicle including the multi-stage automatic transmission according to any one of claims 1 to 5, wherein the required information acquisition portion acquires the current required drive force on a basis of a drive force map that defines a relationship between an accelerator opening and a vehicle speed.

7. The control device of the hybrid vehicle including the multi-stage automatic transmission according to any one of claims 2 to 4, wherein the control portion acquires the targeted delay time in response to an increase amount of an acceleration on a basis of a targeted delay time map that defines a relationship between an accelerator opening and the targeted delay time.

8. The control device of the hybrid vehicle including the multi-stage automatic transmission according to claim 7, wherein the control portion selects a predetermined longest targeted delay time in a case where the accelerator opening is less than 25 percent of a fully-opened accelerator opening, the control portion selecting a targeted delay time that is reduced by 50 percent of the longest targeted delay time in a case where the accelerator opening is equal to or greater than 25 percent and less than 50 percent of the fully-opened accelerator opening.

9. The control device of the hybrid vehicle including the multi-stage automatic transmission according to claim 7, wherein the control portion changes the targeted delay time to a predetermined shortest value in a case where the accelerator opening is greater than a predetermined value.
